# FASCICULE DE BREVET EUROPEEN

(11) **EP 1 564 852 B1**
(45) Date de publication et mention de la délivrance du brevet: **06.08.2008**
(21) Numéro de dépôt: 05100894.4
(22) Date de dépôt: 09.02.2005
(51) Int. Cl.: H01S 3/06, H01S 3/07, H01S 3/08

(54) **Tête de pompage pour amplificateur optique à effet laser**
Pumpvorrichtung für einen optischen Laserverstärker
Pumping unit for an optical laser-amplifier.

(30) Priorité: 10.02.2004 FR 0401284
(43) Date de publication de la demande: 17.08.2005
(73) Titulaire: Thales, 92200 Neuilly Sur Seine (FR)
(72) Inventeur: Durand, Eric, 94117, ARCUEIL Cedex (FR); Derycke, Christophe, 94117, ARCUEIL Cedex (FR)
(74) Mandataire: Esselin, Sophie

(56) Documents cités:
- EP-A- 0 967 699
- US-A- 4 897 849
- PATENT ABSTRACTS OF JAPAN vol. 018, no. 673 (E-1647), 19 décembre 1994 (1994-12-19) -& JP 06 268292 A (UNIV OSAKA; others: 01), 22 septembre 1994 (1994-09-22)

## Description

La présente invention concerne une tête de pompage pour amplification optique à effet laser ainsi qu'un amplificateur laser et un oscillateur laser équipé d'une telle tête de pompage.

Dans le domaine des amplificateurs optiques à effet laser, et notamment pour la réalisation de lasers solides de forte puissance, il est connu d'utiliser des têtes de pompage avec des milieux amplificateurs optiques, ou "slabs" selon l'expression anglo-saxonne, formés d'un bloc généralement de forme sensiblement parallélépipédique, en matériau laser de type cristal de Grenat d'Ytrium et d'Aluminium (ou YAG), dopé par des ions terre rare.

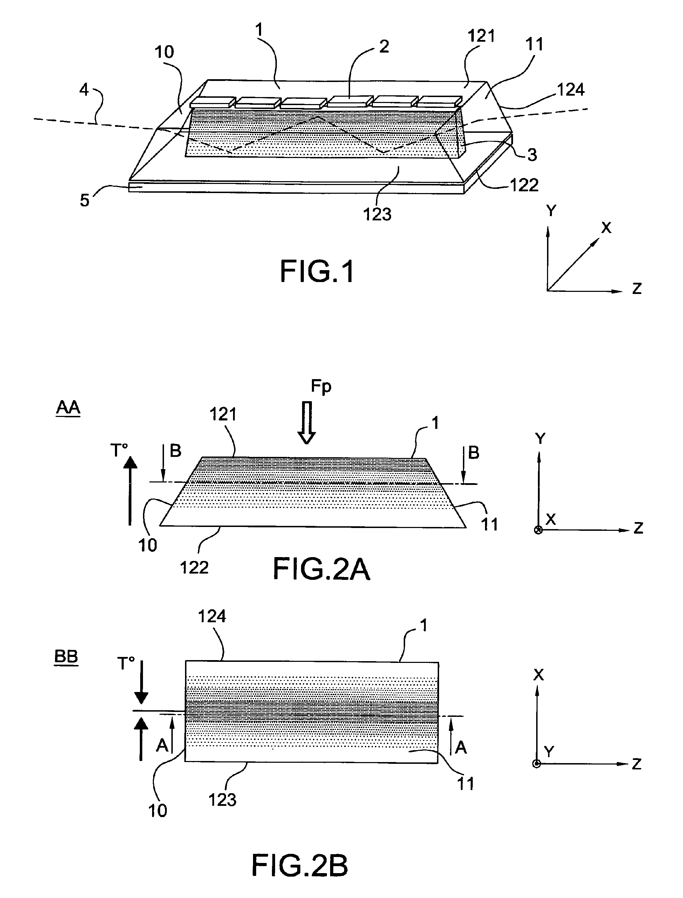

La figure 1 représente un exemple d'un tel milieu amplificateur 1. Il comprend de façon connue un bloc en matériau laser dopé, sensiblement parallélépipédique, avec une face d'entrée 10, une face de sortie 11, quatre faces latérales 121 à 124, dont deux faces latérales principales en vis-à-vis sensiblement parallèles, notées 121 et 122 sur la figure 1. Sur la figure 1, sont également représentés des moyens de pompage 2 agencés sur une desdites faces principales (121), appelée dans la suite face principale de pompage, et destinés à former dans le milieu amplificateur une zone de pompage 3 formant une bande qui s'étend de ladite face principale de pompage jusqu'à la face en vis-à-vis, et dans laquelle un faisceau optique à amplifier 4, incident sur la face d'entrée, est destiné à se propager jusqu'à la face de sortie. On note z l'axe principal de propagation du faisceau (appelé axe longitudinal), et x et y les axes orthogonaux à l'axe longitudinal z, situés dans des directions respectivement transverse à la zone de pompage et parallèle à celle-ci. Un bloc de refroidissement 5 est prévu pour le refroidissement de la face en vis-à-vis de la face principale de pompage.

Les figures 2A et 2B représentent de façon schématique la répartition d'énergie de pompage dans le milieu amplificateur, vue selon deux coupes longitudinales du milieu amplificateur, respectivement la coupe longitudinale AA dans le plan yz (figure 2A) et la coupe longitudinale BB dans le plan xz (figure 2B). Le flux de pompage F_{P} est absorbé par le milieu amplificateur et permet d'exciter les atomes du matériau à l'origine de l'effet laser. Cependant, l'efficacité du processus de pompage restant faible, une partie du flux lumineux est dissipé à l'intérieur du milieu sous forme de chaleur. Dans la direction y parallèle à la zone de pompage 3, le flux lumineux de pompage absorbé par le milieu amplificateur est maximal à proximité de la face de pompage 121, résultant en un gradient thermique entre la face principale de pompage et la face en vis-à-vis représenté sur la figure 2A par une flèche référencée T°. Dans la direction x transverse à la zone de pompage, la répartition de l'énergie de pompage présente une forme quasi-gaussienne avec un maximum au centre, et une atténuation sur les bords, comme cela apparaît sur la figure 2B. Les gradients thermiques créés dans les deux directions x et y orthogonales à l'axe principal z de propagation du faisceau génèrent des distorsions du faisceau après passage dans le milieu amplificateur.

Pour compenser l'effet du gradient thermique dans la direction y parallèle à la zone de pompage, il est connu de faire propager le faisceau lumineux en zig-zag dans la zone de pompage, en lui faisant subir une succession de réflexions totales sur les faces principales en vis-à-vis 121, 122, comme cela apparaît sur la figure 1. Le trajet en zig-zag permet de compenser l'effet du gradient thermique dans cette direction. Par contre, ces gradients ne sont pas compensés dans la direction transverse x, ce qui provoque un fort astigmatisme du faisceau après traversée du milieu amplificateur.

Pour remédier à cet effet, de nombreuses méthodes ont été envisagées dans lesquelles on agit sur le refroidissement des faces latérales. Ces procédés permettent de réduire les gradients de température sans pour autant les compenser et sont compliqués à mettre en oeuvre.

Le brevet US 4,730,324 décrit une tête de pompage à deux milieux amplificateurs sensiblement identiques, d'axes longitudinaux colinéaires, ces deux milieux amplificateurs étant tournés l'un par rapport à l'autre de 90° afin de compenser l'effet d'astigmatisme. Selon une variante, les deux milieux amplificateurs restent alignés, un prisme particulier, appelé prisme de Dove, étant positionné entre les deux milieux amplificateurs pour faire tourner le faisceau. Cette deuxième solution est plus satisfaisante car elle permet d'éviter les problèmes mécaniques et hydrauliques inhérents au positionnement relatif à 90° des deux milieux amplificateurs. Cependant, le prisme de Dove entraîne une dépolarisation du faisceau qu'il est nécessaire de compenser en interposant un élément optique supplémentaire, comme une lame de phase.

L'invention propose une tête de pompage à deux milieux amplificateurs pour compenser le gradient thermique transverse, sans élément optique supplémentaire, et dans laquelle le positionnement relatif de chacun des milieux amplificateurs par rapport à l'axe longitudinal est conservé. Pour cela les axes longitudinaux des milieux amplificateurs ne sont plus maintenus colinéaires, un dispositif optique de réflexion avec deux miroirs plans recevant le faisceau amplifié par le premier milieu amplificateur et le réfléchissant vers le second milieu amplificateur, permettant de faire tourner le faisceau autour de son axe de propagation, sans introduire de dépolarisation.

Plus précisément, l'invention propose une tête de pompage pour amplificateur optique à effet laser, comprenant :
- un premier et un second milieux amplificateurs sensiblement identiques, formés chacun d'un bloc avec une face d'entrée, une face de sortie et quatre faces latérales, dont deux faces principales en vis-à-vis sensiblement parallèles,
- des premier et second moyens de pompage desdits milieux amplificateurs selon l'une desdites faces principales de chacun desdits milieux, appelée face principale de pompage, les moyens de pompage étant destinés à former dans chacun des milieux amplificateurs une zone de pompage dans laquelle un faisceau optique à amplifier, incident sur la face d'entrée, est destiné à se propager en zig-zag jusqu'à la face de sortie, par réflexion totale sur lesdites faces principales,
la tête de pompage étant caractérisée en ce que les milieux amplificateurs sont disposés l'un par rapport à l'autre de telle sorte que leurs faces principales soient situées dans des plans parallèles, les zones de pompage étant non coplanaires, et en ce qu'elle comprend un dispositif optique de réflexion avec au moins deux miroirs plans agencés de telle sorte qu'un faisceau émergent du premier milieu amplificateur selon un axe de propagation donné subisse une rotation de 90° autour dudit axe de propagation avant de pénétrer dans la zone de pompage du second milieu amplificateur.

D'autres avantages et caractéristiques apparaîtront plus clairement à la lecture de la description qui suit, illustrée par les figures annexées qui représentent :
- La figure 1, un schéma illustrant un milieu amplificateur, ou slab (déjà décrite);
- Les figures 2A et 2B, des schémas illustrant la répartition de l'énergie de pompage dans un milieu amplificateur du type de celui de la figure 1 (déjà décrite);
- La figure 3, un exemple de réalisation d'une tête de pompage selon l'invention dans un premier exemple de réalisation;
- La figure 4, un exemple de réalisation d'une tête de pompage selon l'invention dans un second exemple de réalisation.

Sur ces figures les éléments identiques sont référencés par les mêmes repères.

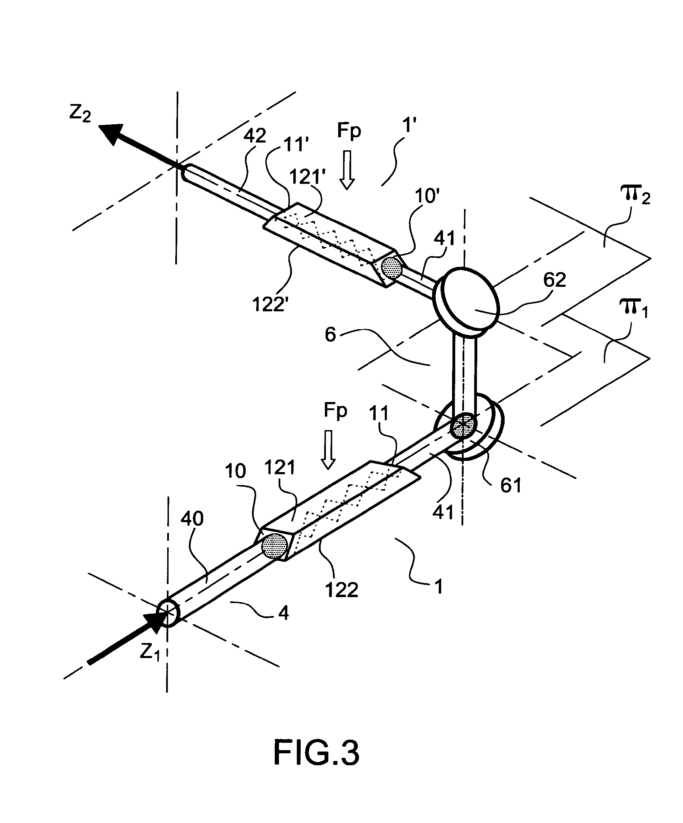

La figure 3 représente un premier exemple de réalisation d'une tête de pompage selon l'invention. Elle comprend un premier et un second milieux amplificateurs 1, 1' sensiblement identiques, du type de ceux représentés sur la figure 1, formés chacun d'un bloc avec une face d'entrée (10, 10'), une face de sortie (11, 11') et quatre faces latérales, dont deux faces principales en vis-à-vis sensiblement parallèles, respectivement 121, 122 et 121', 122'. Le bloc formant le milieu amplificateur est par exemple sensiblement parallélépipédique, avec les faces d'entrée et de sortie parallèles ou sensiblement trapézoïdal avec les faces d'entrée et de sortie non parallèles, comme sur la figure 3.

Les milieux amplificateurs 1, 1' sont par exemple formés avec un cristal de type YAG (Grenat d'Yttrium et d'Aluminium), pompé par des ions terres rares, comme par exemple l'Erbium, l'Holmium, le Néodyme ou le Thulium. D'autres matériaux peuvent bien entendu être utilisés pour réaliser les milieux amplificateurs, tels que les verres phosphate ou silicate, et de façon générale tout milieu laser ayant un indice de réfraction élevé.

La tête de pompage comprend en outre des premier et second moyens de pompage des milieux amplificateurs (non représentés sur la figure 3), selon l'une des faces principales de chacun des milieux, appelée face principale de pompage (respectivement 121 et 121'). Les moyens de pompage sont destinés à émettre un flux de pompage F_{P} permettant de représentée sur la figure 3 mais similaire à la zone de pompage 3 des figures 1, 2A et 2B), s'étendant de la face principale de pompage à la face en vis-à-vis, et dans laquelle un faisceau optique à amplifier, incident sur la face d'entrée, est destiné à se propager. L'indice de réfraction du milieu amplificateur est en général élevé par rapport à celui des matériaux en contact avec les faces principales, de telle sorte qu'un faisceau incident sur la face d'entrée d'un milieu amplificateur avec un angle d'incidence donné se propage en zig-zag jusqu'à la face de sortie, par réflexions totales sur les faces principales. Cette propagation en zigzag permet de compenser les effets de distorsion dus au gradient thermique dans la direction parallèle à la direction du flux de pompage F_{P}.

Avantageusement, les moyens de pompage comprennent des diodes laser ou des empilements de diodes laser sensiblement alignés le long de la face principale de pompage, entre les faces d'entrée et de sortie du milieu amplificateur. D'autres moyens de pompage peuvent être utilisés, type lampes à flashs, à arcs, ou lampes à filament. De façon classique, la tête de pompage peut comprendre des dispositifs de refroidissement des milieux amplificateurs (non représentés sur la figure 3), en particulier pour le refroidissement de la face en vis-à-vis de la face principale de pompage. Par exemple, chaque dispositif de refroidissement de chacun des milieux amplificateurs comprend un bloc de refroidissement de la face en vis-à-vis de la face principale de pompage, du type du bloc de refroidissement 5 représenté sur la figure 1, avec, de façon avantageuse, une couche intermédiaire d'indice donné entre la face à refroidir et le bloc de refroidissement pour assurer la réflexion totale sur ladite face lors de la propagation en zig-zag du faisceau à amplifier.

Bien entendu, d'autres variantes sont possibles pour la mise en oeuvre des moyens de pompage. Par exemple, il est possible de prévoir pour chacun des milieux amplificateurs des moyens de pompage de la face en vis-à-vis de la face principale de pompage, chaque dispositif de refroidissement comprenant alors un bloc de refroidissement pour chacune des faces principales.

Selon l'invention, les milieux amplificateurs 1, 1' sont disposés l'un par rapport à l'autre de telle sorte que leurs faces principales soient situées dans des plans parallèles, les zones de pompage étant non coplanaires. Sur la figure 3, le faisceau optique à amplifier 4 est repéré par ses différentes parties, relativement aux positions des milieux amplificateurs. Ainsi on note 40 la partie du faisceau incidente sur le premier milieu amplificateur, 41, la partie du faisceau émergente du premier milieu amplificateur, et incidente sur le second milieu amplificateur, et 42, la partie du faisceau émergente du second milieu amplificateur. La tête de pompage comprend selon l'invention un dispositif optique de réflexion 6 avec au moins deux miroirs plans 61, 62 agencés de telle sorte que le faisceau 41 émergent du premier milieu amplificateur subisse une rotation de 90° autour de son axe de propagation avant de pénétrer dans la zone de pompage du second milieu amplificateur. Le dispositif optique 6 de réflexion de la tête de pompage selon l'invention permet de compenser sans introduire d'élément optique supplémentaire, et notamment d'élément agissant sur la phase, la distorsion de phase du faisceau optique introduite par les gradients thermiques du premier milieu amplificateur, par simple propagation dans le second milieu amplificateur, sensiblement identique au premier.

Dans l'exemple de la figure 3, l'axe z₁ de propagation du faisceau émergent 41 du premier amplificateur est dans un premier plan donné (π₁), et les deux miroirs plans 61, 62 sont agencés de telle sorte que l'axe de propagation Z₂ du faisceau après réflexion sur les deux miroirs se trouve dans un second plan (π₂) parallèle au premier, l'axe z₂ étant perpendiculaire à la direction de l'axe de propagation z₁ avant réflexion. Selon une première variante, illustrée sur la figure 3, les deux milieux amplificateurs 1, 1' sont disposés dans deux plans parallèles distincts, de telle sorte que les zones de pompage se trouvent sensiblement perpendiculaires l'une à l'autre. Ainsi, le faisceau 41 issu du premier milieu amplificateur se propage dans le plan π₁, se réfléchit sur le miroir 61 dans un plan vertical, puis revient dans un plan π₂ parallèle au plan initial après réflexion sur le miroir plan 62. Le changement de plans permet de faire tourner le faisceau 41 de 90° sans introduire de dépolarisation du faisceau incident lorsque celui-ci est polarisé linéairement.

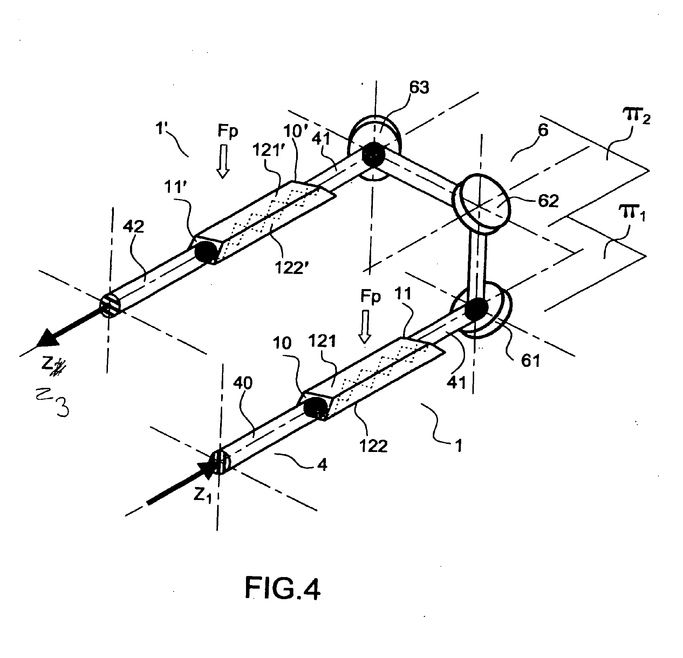

La figure 4 représente une seconde variante d'une tête de pompage selon l'invention, sensiblement similaire à la tête de pompage représentée sur la figure 3 mais dans laquelle le dispositif optique de réflexion comprend un troisième miroir de renvoi 63 permettant de ramener l'axe de propagation z₃ du faisceau après réflexion sur les trois miroirs une direction sensiblement parallèle à la direction de l'axe de propagation z₁ avant réflexion, mais non alignée, les deux milieux amplificateurs 1, 1' étant alors disposés dans deux plans parallèles distincts avec les zones de pompage sensiblement parallèles l'une à l'autre. Comme dans l'exemple de la figure 3, le changement de plans effectué grâce aux miroirs de réflexion 61 et 62 permet de faire tourner le faisceau 41 de 90°. Cette variante présente l'avantage supplémentaire, grâce au troisième miroir 63, de réduire l'encombrement de la tête de pompage, notamment par rapport aux dispositifs de l'art antérieur dans lesquels les milieux amplificateurs étaient nécessairement disposés selon des axes colinéaires.

L'invention concerne en outre un amplificateur laser avec une ou plusieurs têtes de pompage telles que décrites précédemment, et par exemple représentées sur les figures 3 ou 4. Un faisceau incident dans l'amplificateur est alors destiné à être amplifié par chacun des milieux amplificateurs de la ou des têtes de pompage.

Selon une variante, l'amplification est faite par passage unique dans chacun des milieux amplificateurs. Selon une seconde variante, un passage multiple du faisceau à amplifier est prévu dans la zone de pompage d'un ou plusieurs des milieux amplificateurs.

L'invention concerne aussi un oscillateur laser comprenant une cavité oscillante fermée par deux miroirs avec dans la cavité, une ou plusieurs têtes de pompage telles que décrites précédemment. L'oscillateur peut comprendre en outre un déclencheur de type Q-Switch.

## Revendications

1. Tête de pompage pour amplificateur optique à effet laser, comprenant
- un premier et un second milieux amplificateurs (1, 1') sensiblement identiques, formés chacun d'un bloc avec une face d'entrée (10, 10'), une face de sortie (11, 11') et quatre faces latérales, dont deux faces principales en vis-à-vis sensiblement parallèles (121, 122, 121', 122'),
- des premier et second moyens de pompage (2) desdits milieux amplificateurs selon l'une desdites faces principales de chacun desdits milieux, appelée face principale de pompage (121, 121'), les moyens de pompage étant destinés à former dans chacun des milieux amplificateurs une zone de pompage (3) formant une bande qui s'étend de ladite face principale de pompage jusqu'à la face en vis-à-vis dans laquelle un faisceau optique à amplifier (4), incident sur la face d'entrée, est destiné à se propager en zig-zag jusqu'à la face de sortie, par réflexion totale sur lesdites faces principales,
les milieux amplificateurs (1, 1') étant disposés l'un par rapport à l'autre de telle sorte que leurs faces principales soient situées dans des plans parallèles distincts, la tête de pompage étant **caractérisée en ce que** les zones de pompage sont non coplanaires, et **en ce qu'**elle comprend un dispositif optique de réflexion (6) avec deux miroirs plans (61, 62) agencés de telle sorte que le faisceau (41) émergent du premier milieu amplificateur selon un axe de propagation donné (z₁) subisse une rotation de 90° au moyen desdits miroirs autour dudit axe de propagation avant de pénétrer dans la zone de pompage du second milieu amplificateur et **en ce que** la direction de l'axe de propagation (z₂) dudit faisceau après réflexion sur les deux miroirs est perpendiculaire à la direction de l'axe de propagation (z₁) du faisceau avant réflexion.

2. Tête de pompage selon la revendication 1, dans laquelle les deux milieux amplificateurs sont disposés dans deux plans parallèles distincts, de telle sorte que les zones de pompage se trouvent sensiblement perpendiculaires l'une à l'autre.

3. Tête de pompage pour amplificateur optique à effet laser, comprenant
- un premier et un second milieux amplificateurs (1, 1') sensiblement identiques, formés chacun d'un bloc avec une face d'entrée (10, 10'), une face de sortie (11, 11') et quatre faces latérales, dont deux faces principales en vis-à-vis sensiblement parallèles (121, 122, 121', 122'),
- des premier et second moyens de pompage (2) desdits milieux amplificateurs selon l'une desdites faces principales de chacun desdits milieux, appelée face principale de pompage (121, 121'), les moyens de pompage étant destinés à former dans chacun des milieux amplificateurs une zone de pompage (3) formant une bande qui s'étend de ladite face principale de pompage jusqu'à la face en vis-à-vis dans laquelle un faisceau optique à amplifier (4), incident sur la face d'entrée, est destiné à se propager en zig-zag jusqu'à la face de sortie, par réflexion totale sur lesdites faces principales,
les milieux amplificateurs (1, 1') étant disposés l'un par rapport à l'autre de telle sorte que leurs faces principales soient situées dans des plans parallèles distincts,
la tête de pompage étant **caractérisée en ce que** les zones de pompage sont non coplanaires,
et **en ce que** elle comprend un dispositif optique de réflexion (6) avec trois miroirs plans (61, 62, 63) agencés de telle sorte que le faisceau (41) émergent du premier amplificateur (1) étant contenu dans un premier plan (Π₁) donné, soit contenu dans un second plan (Π₂) parallèle au premier après réflexion sur deux premiers miroirs (61, 62) et après réflexion sur le troisième miroir (63), le faisceau (41) émergent du premier milieu amplificateur selon un axe de propagation donné (z₁) subisse une rotation de 90° autour dudit axe de propagation au moyen des deux premiers miroirs (61, 62) avant d'être réfléchi par le troisième miroir (63), et que la direction de l'axe de propagation (z₂) dudit faisceau après réflexion sur les deux premiers miroirs (61, 62) soit perpendiculaire à la direction de l'axe de propagation (z₁) du faisceau avant réflexion et l'axe de propagation (z₃) du faisceau après réflexion sur le troisième miroir (63) soit dans une direction sensiblement parallèle à la direction de l'axe de propagation (z₁) avant réflexion,
les deux milieux amplificateurs étant disposés dans deux plans parallèles distincts, les zones de pompage se trouvant sensiblement parallèles l'une à l'autre.

4. Tête de pompage selon l'une des revendications précédentes, dans laquelle les premier et second moyens de pompage comprennent des diodes laser ou des empilements de diodes laser sensiblement alignés le long de la face principale de pompage, entre les faces d'entrée et de sortie du milieu amplificateur.

5. Tête de pompage selon l'une des revendications précédentes, comprenant en outre des premier et second dispositifs de refroidissement des milieux amplificateurs (5), notamment pour le refroidissement de la face en vis-à-vis de la face principale de pompage.

6. Tête de pompage selon la revendication 5, dans laquelle chaque dispositif de refroidissement comprend un bloc de refroidissement de ladite face en vis-à-vis de la face principale de pompage, avec une couche intermédiaire d'indice donné entre ladite face et le bloc de refroidissement pour assurer la réflexion totale sur ladite face lors de la propagation en zig-zag du faisceau à amplifier.

7. Tête de pompage selon l'une des revendications précédentes, comprenant en outre pour chacun des milieux amplificateurs des moyens de pompage de la face en vis-à-vis de la face principale de pompage, chaque dispositif de refroidissement comprenant un bloc de refroidissement pour chacune des faces principales.

8. Tête de pompage selon l'une des revendications précédentes, dans laquelle le bloc formant le milieu amplificateur est sensiblement parallélépipédique, avec les faces d'entrée et de sortie parallèles ou sensiblement trapézoïdal avec les faces d'entrée et de sortie non parallèles.

9. Tête de pompage selon l'une des revendications précédentes, dans laquelle le milieu amplificateur est formé avec un cristal de type YAG, pompé par des ions terres rares.

10. Tête de pompage selon la revendication 9, dans laquelle les ions terres rares sont l'Erbium, l'Holmium, le Néodyme ou le Thulium.

11. Amplificateur laser comprenant une ou plusieurs têtes de pompage selon l'une des revendications précédentes, un faisceau incident dans l'amplificateur étant destiné à être amplifié par chacun des milieux amplificateurs de la ou des têtes de pompage.

12. Amplificateur laser selon la revendication 11, dans lequel l'amplification dans un ou plusieurs desdits milieux amplificateurs est faite par un passage multiple du faisceau à amplifier dans la zone de pompage dudit milieu.

13. Oscillateur laser comprenant une cavité oscillante fermée par deux miroirs et dans ladite cavité, une ou plusieurs têtes de pompage selon l'une des revendications 1 à 10.

14. Oscillateur laser selon la revendication 13, comprenant en outre un déclencheur de type Q-Switch.

## Claims

1. Pump head for laser optical amplifier comprising
- a first and a second amplifying media (1, 1') that are substantially identical, each formed of a block with an input face (10, 10'), an output face (11, 11') and four lateral faces, including two substantially parallel opposite main faces (121, 122, 121', 122'),
- first and second means (2) for pumping the said amplifying media along one of the said main faces of each of the said media, called the main pumping face (121, 121'), the pumping means being designed to form in each of the amplifying media a pumping zone (3) forming a band which extends from the said main pumping face up to the opposite face in which an optical beam to be amplified (4), incident on the input face, is designed to be propagated in a zig zag up to the output face, by total reflection of the said main faces,
the amplifying media (1, 1') being placed one relative to the other such that their main faces are situated in distinct parallel planes,
the pump head being **characterized in that** the pumping zones are not coplanar and **in that** it comprises a reflective optical device (6) with two flat mirrors (61, 62) arranged such that the beam (41) emerging from the first amplifying medium along a given propagation axis (z₁) sustains a 90° rotation by means of the said mirrors about said propagation axis before entering the pumping zone of the second amplifying medium and **in that** the direction of the propagation axis (z₂) of said beam after reflection on the two mirrors is perpendicular to the direction of the propagation axis (z₁) of the beam before reflection.

2. Pump head according to Claim 1, in which the two amplifying media are placed in two distinct parallel planes, such that the pumping zones are substantially perpendicular to one another.

3. Pump head for laser optical amplifier comprising
- a first and a second amplifying medium (1, 1') that are substantially identical, each formed of a block with an input face (10, 10'), an output face (11, 11') and four lateral faces, including two substantially parallel opposite main faces (121, 122, 121', 122'),
- first and second means (2) for pumping the said amplifying media along one of the said main faces of each of the said media, called the main pumping face (121, 121'), the pumping means being designed to form in each of the amplifying media a pumping zone (3) forming a band which extends from the said main pumping face up to the opposite face in which an optical beam to be amplified (4), incident on the input face, is designed to be propagated in a zig zag up to the output face, by total reflection of the said main faces,
the amplifying media (1, 1') being placed one relative to the other such that their main faces are situated in distinct parallel planes,
the pump head being **characterized in that** the pumping zones are not coplanar,
and **in that** it comprises a reflective optical device (6) with three flat mirrors (61, 62, 63) arranged such that the beam (41) emerging from the first amplifier (1) being contained in a first plane (Π₁), is contained in a second plane (Π₂) parallel to the first after reflection on two first mirrors (61, 62) and after reflection on the third mirror (63), the beam (41) emerging from the first amplifying medium along a given propagation axis (z₁) undergoes a 90° rotation about the said propagation axis by means of the first two mirrors (61, 62) before being reflected by the third mirror (63), and that the direction of the propagation axis (z₂) of the said beam after reflection on the first two mirrors (61, 62) is perpendicular to the direction of the propagation axis (z₁) of the beam before reflection and the propagation axis (z₃) of the beam after reflection on the third mirror (63) is in a direction substantially parallel to the direction of the propagation axis (z₁) before reflection,
the two amplifying media being placed in two distinct parallel planes, the pumping zones being substantially parallel with one another.

4. Pump head according to one of the preceding claims, in which the first and second pumping means comprise laser diodes or stacks of laser diodes substantially aligned along the main pumping face, between the input and output faces of the amplifying medium.

5. Pump head according to one of the preceding claims, also comprising first and second devices for cooling the amplifying media (5), notably for cooling the face opposite to the main pumping face.

6. Pump head according to Claim 5, in which each cooling device comprises a block for cooling the said face opposite to the main pumping face, with an intermediate layer of given index between the said face and the cooling block in order to ensure total reflection on the said face during the zig zag propagation of the beam to be amplified.

7. Pump head according to one of the preceding claims, also comprising for each of the amplifying media means for pumping the face opposite to the main pumping face, each cooling device comprising a cooling block for each of the main faces.

8. Pump head according to one of the preceding claims, in which the block forming the amplifying medium is substantially parallelepipedal, with the input and output faces parallel or substantially trapezoidal with the input and output faces not parallel.

9. Pump head according to one of the preceding claims, in which the amplifying medium is formed with a crystal of the YAG type, pumped by rare-earth ions.

10. Pump head according to Claim 9, in which the rare-earth ions are erbium, holmium, neodymium or thulium.

11. Laser amplifier comprising one or more pump heads according to one of the preceding claims, an incident beam in the amplifier being designed to be amplified by each of the amplifying media of the pump head(s).

12. Laser amplifier according to Claim 11, in which the amplification in one or more of the said amplifying media is carried out by a multiple passage of the beam to be amplified in the pumping zone of the said media.

13. Laser oscillator comprising an oscillating cavity closed by two mirrors and in the said cavity, one or more pump heads according to one of Claims 1 to 10.

14. Laser oscillator according to Claim 13, also comprising a trigger of the Q-Switch type.

## Patentansprüche

1. Pumpkopf für optischen Verstärker mit Lasereffekt, der enthält:
- ein erstes und ein zweites verstärkendes Medium (1, 1'), die im Wesentlichen gleich sind und jeweils aus einem Block mit einer Eintrittsfläche (10, 10'), einer Austrittsfläche (11, 11') und vier Seitenflächen (121, 122, 121', 122'), wovon zwei gegenüberliegende Hauptflächen im Wesentlichen parallel sind, gebildet sind,
- erste und zweite Pumpmittel (2) für die verstärkenden Medien längs einer der Hauptflächen jedes der Medien, die Pumphauptfläche (121, 121') genannt wird, wobei die Pumpmittel dazu bestimmt sind, in jedem der verstärkenden Medien eine Pumpzone (3) zu bilden, die einen Streifen bildet, der sich von der Pumphauptfläche bis zu der gegenüberliegenden Fläche erstreckt, in der sich ein zu verstärkendes Lichtstrahlenbündel (4), das auf die Eintrittsfläche auftrifft, durch Totalreflexion an den Hauptflächen zickzackförmig bis zu der Austrittsflächefläche ausbreiten soll,
wobei die verstärkenden Medien (1, 1') relativ zueinander so angeordnet sind, dass sich ihre Hauptflächen in verschiedenen parallelen Ebenen befinden, wobei der Pumpkopf **dadurch gekennzeichnet ist, dass** die Pumpzonen nicht koplanar sind und dass er eine optische Reflexionsvorrichtung (6) mit zwei ebenen Spiegeln (61, 62) enthält, die in der Weise angeordnet sind, dass das aus dem ersten verstärkenden Medium längs einer gegebenen Ausbreitungsachse (z₁) austretende Strahlenbündel (41) mittels der Spiegel eine Drehung um 90° um die Ausbreitungsachse erfährt, bevor es in die Pumpzone des zweiten verstärkenden Mediums eindringt, und dass die Richtung der Ausbreitungsachse (z₂) des Strahlenbündels nach der Reflexion an den zwei Spiegeln zu der Richtung der Ausbreitungsachse (z₁) des Strahlenbündels vor der Reflexion senkrecht ist.

2. Pumpkopf nach Anspruch 1, bei dem die zwei verstärkenden Medien in zwei verschiedenen parallelen Ebenen angeordnet sind, derart, dass die Pumpzonen im Wesentlichen zueinander parallel sind.

3. Pumpkopf für optischen Verstärker mit Lasereffekt, der enthält:
- ein erstes und ein zweites verstärkendes Medium (1, 1'), die im Wesentlichen gleich sind und jeweils aus einem Block mit einer Eintrittsfläche (10, 10'), einer Austrittsfläche (11, 11') und vier Seitenflächen (121, 122, 121', 122'), wovon zwei gegenüberliegende Hauptflächen im Wesentlichen parallel sind, gebildet sind,
- erste und zweite Pumpmittel (2) für die verstärkenden Medien längs einer der Hauptflächen jedes der Medien, die Pumphauptfläche (121, 121') genannt wird, wobei die Pumpmittel dazu bestimmt sind, in jedem der verstärkenden Medien eine Pumpzone (3) zu bilden, die einen Streifen bildet, der sich von der Pumphauptfläche bis zu der gegenüberliegenden Fläche erstreckt, in der sich das zu verstärkende optische Strahlenbündel (4), das auf die Eintrittsfläche auftritt, durch Totalreflexion an den Hauptflächen zickzackförmig bis zu der Austrittsfläche ausbreiten soll,
wobei die verstärkenden Medien (1, 1') relativ zueinander in der Weise angeordnet sind, dass sich ihre Hauptflächen in verschiedenen parallelen Ebenen befinden, wobei der Pumpkopf **dadurch gekennzeichnet ist, dass** die Pumpzonen nicht koplanar sind,
und dass er eine optische Reflexionsvorrichtung (6) mit drei ebenen Spiegeln (61, 62, 63) enthält, die in der Weise angeordnet sind, dass das aus dem ersten Verstärker (1) austretende Strahlenbündel (41), das in einer gegebenen ersten Ebene (Π₁) enthalten ist, nach einer Reflexion an zwei ersten Spiegeln (61, 62) und nach einer Reflexion an dem dritten Spiegel (63) in einer zweiten Ebene (Π₂), die zu der ersten parallel ist, enthalten ist, wobei das Strahlenbündel (41), das aus dem ersten verstärkenden Medium längs einer gegebenen Ausbreitungsachse (z₁) austritt, mittels der zwei ersten Spiegel (61, 62) eine Drehung um 90° um die Ausbreitungsachse erfährt, bevor es durch den dritten Spiegel (63) reflektiert wird, und dass die Richtung der Ausbreitungsachse (z₂) des Strahlenbündels nach einer Reflexion an den zwei ersten Spiegeln (61, 62) zur Richtung der Ausbreitungsachse (z₁) des Strahlenbündels vor der Reflexion senkrecht ist und die Ausbreitungsachse (z₃) des Strahlenbündels nach der Reflexion an dem dritten Spiegel (63) eine Richtung hat, die zu der Richtung der Ausbreitungsachse (z₁) vor der Reflexion im Wesentlichen parallel ist,
wobei die zwei verstärkenden Medien in zwei verschiedenen parallelen Ebenen angeordnet sind, wobei die Pumpzonen im Wesentlichen parallel zueinander sind.

4. Pumpkopf nach einem der vorhergehenden Ansprüche, bei dem die ersten und die zweiten Pumpmittel Laserdioden oder Laserdioden-Anordnungen enthalten, die im Wesentlichen längs der Pumphauptfläche zwischen der Eintrittsfläche und der Austrittsfläche des verstärkenden Mediums ausgerichtet sind.

5. Pumpkopf nach einem der vorhergehenden Ansprüche, der außerdem eine erste und eine zweite Kühlungsvorrichtung für die verstärkenden Medien (5), insbesondere für die Kühlung der Fläche gegenüber der Pumphauptfläche, enthält.

6. Pumpkopf nach Anspruch 5, bei dem jede Kühlungsvorrichtung einen Kühlungsblock für die Fläche gegenüber der Pumphauptfläche enthält, wobei eine Zwischenschicht mit gegebenem Brechungsindex zwischen dieser Fläche und dem Kühlungsblock vorhanden ist, um die Totalreflexion an dieser Fläche bei der zickzackförmigen Ausbreitung des zu verstärkenden Strahlenbündels zu gewährleisten.

7. Pumpkopf nach einem der vorhergehenden Ansprüche, der außerdem für jedes der verstärkenden Medien Pumpmittel für die Fläche gegenüber der Pumphauptfläche enthält, wobei jede Kühlungsvorrichtung einen Kühlungsblock für jede der Hauptflächen enthält.

8. Pumpkopf nach einem der vorhergehenden Ansprüche,
wobei der Block, der das verstärkende Medium bildet, im Wesentlichen die Form eines Parallelepipeds hat, wobei die Eintrittsfläche und die Austrittsfläche parallel sind, oder im Wesentlichen die Form eines Trapezes hat,
wobei die Eintrittsfläche und die Austrittsfläche nicht parallel sind.

9. Pumpkopf nach einem der vorhergehenden Ansprüche,
wobei das verstärkende Medium aus einem Kristall des YAG-Typs, der durch Seltenerd-Ionen gepumpt wird, gebildet ist.

10. Pumpkopf nach Anspruch 9, wobei die Seltenerd-Ionen Erbium, Holmium, Neodym oder Thulium sind.

11. Laserverstärker, der einen oder mehrere Pumpköpfe nach einem der vorhergehenden Ansprüche enthält, wobei ein auf den Verstärker auftreffendes Strahlenbündel durch jedes der verstärkenden Medien des oder der Pumpköpfe verstärkt werden soll.

12. Laserverstärker nach Anspruch 11, wobei die Verstärkung in einem oder in mehreren der verstärkenden Medien durch einen mehrfachen Durchgang des zu verstärkenden Strahlenbündels durch die Pumpzone des Mediums erfolgt.

13. Laseroszillator, der einen Resonanzhohlraum, der durch zwei Spiegel verschlossen ist, und in dem Hohlraum einen oder mehrere Pumpköpfe nach einem der Ansprüche 1 bis 10 enthält.

14. Laseroszillator nach Anspruch 13, der außerdem einen Güteschalter des Typs Q-Switch enthält.
